# EUROPÄISCHE PATENTSCHRIFT

(11) **EP 2 621 980 B1**
(45) Veröffentlichungstag und Bekanntmachung des Hinweises auf die Patenterteilung: **17.01.2018**
(21) Anmeldenummer: 11761044.4
(22) Anmeldetag: 16.09.2011
(51) Int. Cl.: C08G 18/10, C08G 18/42, C08G 18/48, C08G 18/71, C08G 18/76, C09J 175/08

(54) **POLYURETHAN-SCHMELZKLEBSTOFF MIT VERMINDERTER VISKOSITÄT**
POLYURETHANENE HOT-MELT ADHESIVE WITH REDUCED VISCOSITY
ADHÉSIF FUSIBLE POLYURÉTHANNE À VISCOSITÉ RÉDUITE

(30) Priorität: 01.10.2010 DE 102010041855
(43) Veröffentlichungstag der Anmeldung: 07.08.2013
(73) Patentinhaber: Henkel AG & Co. KGaA, 40589 Düsseldorf (DE)
(72) Erfinder: KREBS, Michael, 40724 Hilden (DE); FRANKEN, Uwe, 41542 Dormagen (DE)
(86) Internationale Anmeldenummer: PCT/EP2011/066094
(87) Internationale Veröffentlichungsnummer: WO 2012/041718

(56) Entgegenhaltungen:
- EP-A1- 0 107 097
- EP-A1- 0 484 761
- WO-A1-02/079292
- US-A- 5 441 808

## Beschreibung

Die Erfindung betrifft vernetzende Polyurethanklebstoffe mit guter Anfangsklebkraft und niedriger Applikationsviskosität, die zusätzlich nicht vernetzende Polyester enthalten.

Schmelzklebstoffe sind allgemein bekannt. Dabei kann es sich um nicht reaktive thermoplastische Klebstoffe handeln, es sind auch reaktive Klebstoffe bekannt. Dabei handelt es sich häufig um über NCO-Gruppen vernetzende Systeme. Es ist bekannt, dass mit einer höheren Applikationsviskosität auch eine verbesserte Anfangsstärke der Verklebung zu erhalten ist. Senkt man die Viskosität zum Beispiel durch Zugabe von Weichmachern, wird die Kohäsion allgemein verschlechtert. Erhöht man die Applikationstemperatur, werden Klebstoff und Substrat stärker thermisch belastet. Auch ist der Energieaufwand höher. Da es sich um reaktive Systeme handelt, ist die Belastung mit monomeren Diisocyanaten bei der Verarbeitung bei höheren Temperaturen kritisch. Erhöht man das Molekulargewicht durch Umsetzen mit kettenverlängernden Substanzen steigt die Anfangsfestigkeit der Verklebung, aber auch die Viskosität. Es ist aber ein gewünschtes Ziel, eine niedrige Viskosität und eine niedrige Verarbeitungstemperatur zu erhalten.

WO 91/15530 beschreibt einen Schmelzklebstoff, der als Bestandteil ein NCOgruppenhaltiges Prepolymer enthält sowie ein Polyether-Polyester, der keine NCO Gruppen aufweist. Das Prepolymer wird auf übliche Weise hergestellt, deswegen ist es bekannt, dass diese Prepolymere einen signifikanten Anteil an monomeren Isocyanaten enthalten. Die Block-Polyether-Polyester werden als Umsetzungsprodukte von Diolen und Dicarbonsäuren beschrieben. Eine Verminderung der funktionellen Endgruppen wird nicht beschrieben.

WO 01/46330 beschreibt Schmelzklebstoffe, die ein reaktives PU-Prepolymer umfassen sowie ein weiteres Prepolymer, das aus Polyether-Polyester-Polyolen besteht, wobei diese mit Diisocyanaten im Überschuss abreagiert worden sind zu NCO-Prepolymeren.

Die DE 4035280 beschreibt Schmelzklebstoffe, die mehr als 70% Prepolymere mit NCO-Gruppen auf Basis von Polyesterdiolen enthalten, sowie bis zu 30 % Polyester, die nur bis zu 0,5 aktive H-Atomen pro Molekül aufweisen.

Die im Stand der Technik beschrieben Klebstoffe haben verschiedene Nachteile. Durch die Reaktion mit einem Überschuss an monomeren Isocyanaten sind diese in dem Klebstoff noch enthalten, dabei senken sie vorteilhafterweise die Viskosität. Es ist aber bekannt das Monomere bei der Verarbeitung in die Gasphase übergehen und so Probleme beim Arbeitschutz auftreten. Deswegen sollen solche Monomere vermindert werden. Weiterhin führt eine Reaktion der reaktiven Gruppen von polyfunktionellen Polymeren mit den Prepolymeren zu einem Molekulargewichtsaufbau und so zu einer Viskositätserhöhung. Das ergibt dann eine ungünstigere Verarbeitung der Klebstoffe.

Es ist deswegen Aufgabe der vorliegenden Erfindung einen Schmelzklebstoff bereit zu stellen, der in monomerarmer Form angewendet werden kann, dabei aber eine niedrige Applikationsviskosität aufweist. Weiterhin soll der Klebstoff beim Verkleben einen schnellen Haftungsaufbau sicherstellen.

Die Aufgabe wird gelöst durch einen reaktiven Schmelzklebstoff, der 30 bis unter 70 Gew-% mindestens eines Prepolymeren mit mindestens zwei Isocyanatgruppen mit einem Molekulargewicht unter 6000 g/mol enthält, hergestellt aus Polyetherpolyolen und/oder Polyesterpolyolen umgesetzt mit einem molaren Überschuss von Diisocyanaten, wobei das Prepolymer weniger als 1 % monomeres Diisocyanat enthält, und mehr als 30 bis 70 Gew.-% eines thermoplastischen Polyesters mit einem zahlenmittleren Molekulargewicht (M_{N}) unter 6000 g/mol, der weniger als 1,4 mit NCO reaktive Gruppen aufweist, sowie gegebenenfalls bis 30 Gew-% Additive aus der Gruppe der Katalysatoren, Harze, Weichmacher, weitere Polymere, Füller, Pigmente, Stabilisatoren oder Haftvermittler.

Die erfindungsgemäß geeigneten Prepolymere mit Isocyanatgruppen können nach an sich bekannten Verfahren durch Umsetzung von Polyolen mit einem Überschuss an Di- und/oder Triisocyanaten hergestellt werden. Durch die Menge der Isocyanate kann die Bildung von unerwünschten hochmolekularen oder verzweigten Nebenprodukten vermindert werden. In einer Ausführungsform können so Prepolymere entstehen, die ein Polyolrückgrat aufweisen und endständig reaktive NCO-Gruppen tragen.

Im Rahmen der Erfindung sind eine Vielzahl von mehrfunktionellen Alkoholen zur Synthese der Prepolymere geeignet. Diese sollen 2 bis 10, insbesondere von 2 oder 3 OH-Gruppen, pro Molekül aufweisen. Bei den Verbindungen mit mehreren OH-Gruppen kann es sich um solche handeln, die endständige OH-Gruppen tragen oder es können Verbindungen sein, die über die Kette verteilt seitenständig OH-Gruppen aufweisen. Bei den OH-Gruppen handelt es sich um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Polyole sind solche auf Basis von Polyethern, Polyalkylenen oder Polyestern.

Insbesondere geeignet sind Polyetherpolyole als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylenoxiden zu Polyetherpolyolen geeignet. Weitere, im Rahmen der Erfindung geeignete Polyole entstehen durch Polymerisation von Tetrahydrofuran (Poly-THF). Die Polyetherpolyole werden in dem Fachmann bekannter Weise hergestellt und sind kommerziell erhältlich.

Unter den genannten Polyetherpolyolen sind die Umsetzungsprodukte von niedermolekularen Alkoholen mit Propylenoxid unter Bedingungen, bei denen teilweise sekundäre Hydroxylgruppen entstehen, besonders geeignet.

Weiterhin sind Polyesterpolyole geeignet. Derartige Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, Butandiol, Propandiol, Ethylengylkol, 1,4-Hydroxymethylcyclohexan, 2-Methyl-1,3-propandiol, Triethylenglykol, Tetraethylenglykol, Ethylenglykol, Polyethylenglykol, Dipropylenglykol, Polypropylenglykol, Dibutylenglykol und Gemische verschiedener Alkohole.

Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Als Tricarbonsäuren sind bevorzugt Zitronensäure oder Trimellithsäure geeignet. Die genannten Säuren können einzeln oder als Gemische aus zwei oder mehr davon eingesetzt werden. Dem Fachmann sind solche OH-funktionelle Polyester bekannt und sie sind kommerziell erhältlich. Insbesondere geeignet sind zwei oder drei endständige OH-Gruppen enthaltene Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Beispiele dafür sind auch Rizinusöl.

Weitere geeignete Polyesterpole sind Polycarbonat-Polyole. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Eine weitere Gruppe der erfindungsgemäß einzusetzenden Polyole sind die Polyester auf der Basis von ε-Caprolacton. Auch Polyesterpolyole sind geeignet, die in der Molekülkette eine oder mehrere Urethangruppen enthalten.

Beispielsweise geeignet sind Polyetherpolyole und/oder Polyesterpolyole mit einem Molekulargewicht von 200 bis 5000 g/mol, vorzugsweise 400 bis 4000 g/mol, (zahlenmittleres Molekulargewicht, gemessen über GPC). Bevorzugte Polyole sollen im Molekül 2 oder 3 OH-Gruppen aufweisen, insbesondere sind Diole geeignet.

Weiterhin geeignete Polyole sind beispielsweise Alkylenpolyole mit 2 bis 6 OH-Gruppen pro Molekül. Es sind bevorzugt Alkohole mit primären und sekundären OH-Gruppen geeignet. Zu den geeigneten aliphatischen Alkoholen zählen beispielsweise Diole wie Ethylenglykol, Propylenglykol, Butandiol-1,4, Pentandiol-1,5, Hexandiol-1,6, Heptandiol-1,7, Octandiol-1,8 1,10-Decandiol, 1,12-Dodecandiol, Dimerfettalkohol und deren höhere Homologen oder Isomeren. Ebenfalls geeignet sind höherfunktionelle Alkohole wie beispielsweise Glycerin, Trimethylolethan, Pentaerythrit und/oder Trimethylolpropan, oder höher funktioneller Alkohole, wie beispielsweise Pentaerythrit. Diese können zumindest anteilig enthalten sein. Geeignete aliphatische Alkohole besitzen ein Molekulargewicht von 60 bis 400 g/mol. Insbesondere werden jedoch lineare Alkohole mit 2 bis 30 C-Atomen eingesetzt, die zwei bis zu vier OH-Gruppen aufweisen.
Die Polyole können einzeln oder im Gemisch eingesetzt werden. Dabei können sich auch gemischte PU-Prepolymere bilden.

Unter geeigneten monomeren Isocyanaten für die vorliegende Erfindung werden solche mit zwei oder mit drei NCO-Gruppen im Molekül verstanden. Es handelt sich dabei bevorzugt um die bekannten aliphatischen, cycloaliphatischen oder aromatischen monomeren Isocyanate.

Als geeignete Isocyanate können solche mit einem Molekulargewicht von 160 bis 500 g/mol eingesetzt werden. Beispielsweise sind diese ausgewählt aus der Gruppe 1,5-Naphthylendiiso-cyanat, 4,4'-Diphenylmethandiisocyanat (MDI), hydriertes oder teilhydriertes MDI (H12MDI , H6MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocya-nato-2,4,4-trimethylhexan, chlorierte und bromierte Diisocyanate, phosphorhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiisocyanat, Cyclohexan-1,4-diisocyanat, Ethylen-diisocyanat, Methylentriphenyltriisocyanat (MIT), Phthalsäure-bis-isocyanato-ethylester, Diisocyanate mit reaktionsfähigen Halogenatomen, wie 1-Chlormethylphenyl-2,4-diisocyanat, 1-Brommethyl-phenyl-2,6-diisocyanat,3,3-Bis-chlormethylether-4,4'-diphenyldiisocyanat. Weitere einsetzbare Diisocyanate sind Trimethylhexamethylendiisocyanat, 1,4-Diisocyanatobutan, 1,12-Diisocyanato-dodecan und Dimerfettsäurediisocyanat, Lysindiisocyanat, 4,4-Dicyclohexylmethandiisocyanat, 1,3-Cyclohexan- oder 1,4-Cyclohexandiisocyanat.

Geeignete Diisocyanate mit zwei NCO-Gruppen unterschiedlicher Reaktivität werden aus der Gruppe der aromatischen, aliphatischen oder cycloaliphatischen Diisocyanate ausgewählt. Beispiele für besonders geeignete Diisocyanate mit unterschiedlich reaktiven NCO-Gruppen sind die Isomeren des Toluylendiisocyanats (TDI), Naphthalin-1,4-diisocyanat, 1,3-Phenylendiisocyanat oder 2,4'- Diphenylmethandiisocyanat (2,4'-MDI), 1,6-Diisocyanato-2,2,4-trimethylhexan, 1,6-Diisocyanato-2,4,4-trimethylhexan und Lysindiisocyanat, 1-Isocyanatomethyl-3-isocyanato-1,5,5-trimethyl-cyclohexan (Isophorondiisocyanat, IPDI), 1-Methyl-2,4-diisocyanato-cyclohexan oder 1,4 Diisocyanato-2,2,6-trimethylcyclohexan (TMCDI).

Als trifunktionelle Isocyanate geeignet sind solche Isocyanate, die durch Trimerisation oder Oligomerisation von Diisocyanaten oder durch Reaktion von Diisocyanaten mit trifunktionellen hydroxylgruppenhaltigen Verbindungen, beispielsweise mit einem Molekulargewicht unter 500 g/mol, entstehen. Beispiele dafür sind Trimerisierungsprodukte der Isocyanate HDI, MDI oder IPDI.

Aus den oben erwähnten Polyolen und Polyisocyanaten werden durch bekannte Verfahren die erfindungsgemäß geeigneten Prepolymere hergestellt. Dabei werden die Isocyanate in stöchiometrischem Überschuss mit den Polyolen umgesetzt. Besonders geeignete Prepolymere mit günstiger Molmassenverteilung können bei einem NCO:OH-Verhältnis von 4:1 bis 10:1 erhalten werden. Die Umsetzung kann beispielsweise bei Raumtemperatur geschehen, es können auch erhöhte Temperaturen angewandt werden. Die Ausgangsverbindungen reagieren im Allgemeinen spontan miteinander, es kann aber auch notwendig sein, dass Katalysatoren, wie metallorganische Verbindungen oder organische Aminoverbindungen zugesetzt werden. Weiterhin können die bekannten Verfahren eingesetzt werden, um nicht umgesetzte monomere Polyisocyanate zu entfernen. Das kann beispielsweise durch Fällen oder durch Abfangen der monomeren Isocyanate geschehen. Eine bevorzugte Ausführungsform entfernt die nicht umgesetzten Monomere durch Abdestillieren der Monomere im Vakuum, beispielsweise in einem Dünnschichtverdampfer.

In einer anderen bevorzugten Ausführungsform werden zur Herstellung der Prepolymere asymmetrischen Diisocyanate verwendet. Auf diese Weise kann die selektive Reaktion der monomeren asymmetrischen Diisocyanate mit den Diolen ausgenutzt werden, so dass bei geeigneten stöchiometrischen Verhältnissen und geeigneter Reaktionsführung das Reaktionsprodukt nur einen geringen Anteil an monomeren, niedermolekularen Diisocyanaten aufweist.

Die erfindungsgemäß einsetzbaren monomerarmen Prepolymere sollen einen Gehalt an monomeren, nicht umgesetzten Polyisocyanaten von unterhalb 1 Gew.-% (bezogen auf das Prepolymer) aufweisen, insbesondere weniger als 0,1 Gew.-%. Die Prepolymere weisen ein Molekulargewicht von 300 bis 6000 g/mol auf, vorzugsweise kleiner als 4000, insbesondere weniger als 2000 g/mol. Die Anzahl der NCO-Gruppen pro Molekül beträgt 3 oder insbesondere 2, insbesondere werden ausschließlich reaktive aromatische Diisocyanate umgesetzt. Die Menge der Prepolymere soll von 30 bis 70 Gew.-% (bezogen auf den Klebstoff) betragen.

Erfindungsgemäß soll der Schmelzklebstoff mindestens einen thermoplastischen Polyester enthalten. Dabei soll das Molekulargewicht des thermoplastischen Polyesters unter 6000 g/mol betragen. Erfindungsgemäß müssen die Polyester nur eine geringe Funktionalität aufweisen, sie sollen nur eine geringe Anzahl mit Isocyanaten reaktiven Gruppen enthalten. Die Menge wird so ausgewählt, dass keine beidseitige Kettenverlängerung der Prepolymere eintritt. Es sollen im Schnitt weniger als 1,4 mit NCO-Gruppen reaktive Gruppen pro Polymerkette enthalten sein, bevorzugt weniger als 1, insbesondere sollen sie im Wesentlichen frei von NCOreaktiven Gruppen sein.

Als Polyester kommen die bekannten Polyester auf Basis von Umsetzungsprodukten von polyfunktionellen, vorzugsweise difunktionellen Alkoholen, gegebenenfalls zusammen mit geringen Mengen an trifunktionellen Alkoholen,
und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Es können die an sich bekannten Polyester eingesetzt werden. Insbesondere sind Polyester auf Basis von aliphatischen Dicarbonsäuren geeignet.

Die Funktionalität der thermoplastischen Polyester soll vermindert sein. Das kann durch verschiedene Maßnahmen erreicht werden. Beispielsweise kann bereits bei der Synthese durch Zugabe von einwertigen Alkoholen die Anzahl der OH- oder COOH-haltigen Endgruppen vermindert werden. Eine andere Arbeitsweise reduziert die Anzahl der funktionellen Gruppen der Polyester durch polymeranaloge Umsetzungen mit niedermolekularen monofunktionellen Verbindungen, beispielsweise unter 500 g/mol.

Beispielsweise ist es möglich, OH- oder COOH-Gruppen durch Umsetzen mit Carbonsäurehalogeniden zu vermindern. Durch die hohe Reaktivität solcher Derivate ist die Umsetzung leicht zu erreichen. Eine andere Arbeitsweise setzt vorhandene funktionelle Gruppen mit Estern oder Orthoestern um. Durch Entfernen der flüchtigen Reaktionsprodukte kann eine Reaktion unterstützt werden und die Anzahl der reaktiven Gruppen vermindert werden. Eine weitere geeignete Arbeitsweise setzt vorhandene funktionelle Gruppen mit Carbonsäureanhydriden um. Gegebenenfalls ist es auch möglich, Anteile von Lösemitteln zuzusetzen, um die Umsetzung zu erleichtern. Diese können danach gegebenenfalls zusammen mit Nebenprodukten durch Destillation im Vakuum wieder entfernt werden.

Eine bevorzugte Ausführungsform setzt vorhandene OH- oder COOH-Gruppen mit einwertigen Isocyanaten um. Insbesondere geeignet sind Monoisocyanate, wie Phenylisocyanat, Tosylisocyanat oder Stearylisocyanat. Diese können bis zu äquimolaren Mengen (bezogen auf die OH-Gruppen der thermoplastischen Polyester) zugesetzt werden, beispielsweise mit einem NCO:OH-Verhältnis von circa 0,3:1 bis 1,02:1, insbesondere bis 0,98:1, und reagieren mit den thermoplastischen Polyestern unter Bildung von Urethangruppen. Ein Überschuss solcher monomerer Isocyanate soll vermieden werden. Es kann durch die Umsetzung die Menge der mit NCO reaktiven Gruppen reduziert werden.

Die Menge der thermoplastischen Polyester soll mehr als 30 bis zu 70 Gew-% (bezogen auf den Klebstoff) betragen. Bevorzugt handelt es sich um Polyester auf Basis von kristallinen oder semikristallinen Polyesterdiolen, die in der Funktionlität vermindert wurden. Eine besondere Ausführungsform setzt solche linearen Polyester ein, die auch Urethangruppen aufweisen. Beispielsweise können geeignete thermoplastische Polyester eine Urethangruppe oder insbesondere zwei Urethangruppen enthalten. Über Menge und Auswahl der thermoplastischen Polyester kann die Viskosität des Schmelzklebstoffes beeinflusst werden.

Die erfindungsgemäßen feuchtigkeitshärtenden Schmelzklebstoffe können zusätzlich Additive enthalten beispiele dafür sind klebrigmachende Harze, haftvermittelnde Zusätze, Füllstoffe, Pigmente, Weichmacher, Stabilisatoren und/oder Katalysatoren, Wachse oder deren Mischungen sowie weitere übliche Hilfs- und Zusatzstoffe.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. Als Katalysatoren sind die bekannten metallorganischen und / oder aminischen Katalysatoren in Mengen bis zu 2 % geeignet, z.B. die metallorganische Verbindungen des Zinns, Eisens, Titans oder Wismuts wie Zinn(II)salze von Carbonsäuren oder die Dialkyl-Zinn(IV)-Carboxylate. Als Stabilisatoren dienen beispielsweise Antioxidantien, wie die handelsüblichen sterisch gehinderten Phenole und/oder Thioether und/oder substituierten Benzotriazole oder die sterisch gehinderten Amine vom Typ des HALS. In speziellen Zusammensetzungen können insbesondere auch Weichmacher zugesetzt werden. Dabei handelt es sich um nicht reaktive Weichmacher, beispielsweise um naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate oder Kohlenwasserstofföle. Typische Haftvermittler sind zum Beispiel Ethylen/Acrylamid-Comonomere, polymere Isocyanate, reaktive siliciumorganische Verbindungen oder Phosphorderivate, insbesondere sind auch Silane geeignet, die hydrolysierbare Gruppen enthalten. Pigmente und Füllstoffe können in geringen Mengen ebenfalls enthalten sein. Wachse können natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse sind geeignet.

Eine weitere Ausführungsform der Erfindung kann als Additive noch Anteile von anderen Polymeren ohne weitere funktionelle Gruppen enthalten. Es kann sich dabei um synthetische Polymere handeln, die für Schmelzklebstoffe wichtige Eigenschaften wie Haftung, Festigkeit und Temperaturverhalten beeinflussen. Solche Polymere können beispielsweise sein Polykondensate, wie (Co)Polyamide, Polyamid/EVA-Copolymere, Polyetheramide, Polyetheresteramide; Polymerisate wie Polyvinylpyrrolidon, Polyethyloxazoline, Polyvinyl-methylether, Ethylen-, Ethylen/Vinylacetat-, Ethylen/Acrylat-, Propylen-, (Meth)Acrylatcopolymere. Insbesondere sind Polymere aus der Gruppe der Poly(meth)acrylate und deren Copolymere geeignet. Es handelt sich beispielsweise um Copolymere von ethylenisch ungesättigten Verbindungen, wie C1 to C18-Alkylestern der (Meth)acrylsäure, (Meth)acrylsäure, Ester der (Meth)acrylsäure mit Glycolethern, wie Methoxyethanol und/oder Ethoxyethanol, Vinylestern wie Vinylacetat, Vinylpropionat, Vinylestern von verzweigten Monocarbonsäuren. Insbesondere sollen solche (Meth)Acrylate ein mittleres Molekulargewicht (M_{N}) unter 60000g/mol aufweisen, insbesondere von 10000 bis 40000 g/mol. Solche weiteren Polymere können in Mengen von 0 bis 20 Gew-% enthalten sein insbesondere von 5 bis 15 Gew-%. Insgesamt sollen als Additive weniger als 30 Gew-% im Klebstoff enthalten sein.

Ein erfindungsgemäßer Schmelzklebstoff enthält insbesondere 30 bis weniger als 70 Gew-% mindestens eines monomerarmen Prepolymeren mit einem Molekulargewicht (M_{N}) unter 6000 g/mol, als Umsetzungsprodukt aus Polyetherdiolen, Polyalkylendiolen und/oder Polyesterdiolen und einem Überschuss von aromatischen Diisocyanaten, über 30 bis 70 Gew.-% mindestens eines thermoplastischen Polyesters mit einem Molekulargewicht (M_{N}) unter 6000 g/mol, der weniger als 1,4 NCO-reaktive Gruppen aufweist, sowie bis 30 Gew-% Additive. Dabei soll die Summe der Bestandteile 100 Gew.-% ergeben.

Ein erfindungsgemäßer Schmelzklebstoff zeichnet sich durch eine günstige Viskosität aus. Diese beträgt gemessen bei einer Temperatur zwischen 90°C bis 130°C von 4.000 mPas bis 40.000 mPas (gemessen nach EN ISO 2555, Brookfield Viskosimeter). Insbesondere soll die Viskosität gemessen bei einer Temperatur zwischen 90 bis 120°C von 4.000 bis 30.000 mPas betragen. Ein erfindungsgemäßer Schmelzklebstoff soll 0,25 bis 4 Gew.-% NCO-Gruppen enthalten.

Durch die Auswahl der erfindungsgemäßen eingesetzten thermoplastischen Polyester mit wenigen reaktiven Gruppen kann sichergestellt werden, dass der erfindungsgemäße Klebstoff eine entsprechend niedrige Viskosität aufweist. Weiterhin ist durch die Auswahl des Polyesters ein niedriger Schmelzpunkt ermöglicht, sodass schon bei niedrigen Temperaturen eine geeignete Applikationsviskosität erhalten werden kann. Trotz des geringen Gehalts an monomeren Diisocyanaten weist ein erfindungsgemäßer Schmelzklebstoff noch eine niedrige geeignete Schmelzviskosität auf.

Der erfindungsgemäße Schmelzklebstoff ist zum Verkleben von verschiedenen Substraten geeignet. Insbesondere können durch die niedrige Applikationsviskosität auch Substrate verklebt werden, die temperaturempfindlich sind. So ist eine Verklebung beispielsweise von empfindlichen Folien, Kunststoff, Papier und ähnlichen Substraten möglich. Dabei kann ein erfindungsgemäßer Klebstoff bei niedrigen Temperaturen von beispielsweise unter 150°C aufgetragen werden, insbesondere auch von 90 bis 130°C. Die Viskosität ermöglicht ein gutes Anfließen an das Substrat. Danach kühlt der Klebstoff ab, er wird fest und kristallisiert. Es bildet sich schnell eine Haftung zum Substrat aus, dabei kann das verklebte Substrat rasch weiterverarbeitet werden. Da bei der üblichen Verarbeitung der Klebstoffe diese eine längere Zeit im geschmolzenen Zustand im Vorratstank bleiben, ist es vorteilhaft, dass die Viskosität dabei konstant bleibt und der Klebstoff weiterhin gut zu verarbeiten ist.

Der erfindungsgemäße Schmelzklebstoff weist nach dem Erkalten einen schnellen Aufbau der Haftung der Klebstoffschicht auf. Der Klebstoff kristallisiert dabei. Deswegen können mit einem Schmelzklebstoff verklebte Substrate rasch weiterverarbeitet werden, die endgültige chemische Vernetzungsreaktion unter Einfluss von Feuchtigkeit kann später erfolgen. Dann baut sich die endgültige Härte und Kohäsion des erfindungsgemäßen Klebstoffs auf.

Die Erfindung wird jetzt durch Beispiele erläutert.

### Beispiel 1 (Vergleich)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (aus Adipinsäure und Hexandiol-1,6, OHZ 30) | 40 TI. |
| Kohlenwasserstoffharz (M_{N} < 1000) | 10,0 |
| Monomerarmes Prepolymer (aus PPG 750 und 4,4-MDI, NCO-Gehalt: 5,9%, Monomergehalt < 0,1 %, nach Entmonomerisierung. Die Umsetzung der Isocyanatgruppen mit den Hydroxylgruppen erfolgt bei 130°C.) | 50,0 |

Die Bestandteile werden in der Wärme unter Ausschluss von Feuchtigkeit gemischt. Danach kann der Klebstoff in feuchtigkeitsdicht schließende Behälter abgefüllt und später eingesetzt werden.
NCO-Gehalt: 2,1 %

### Beispiel 2 (erfindungsgemäß)

Analog Versuch 1 wurde umgesetzt:

| | |
|---|---|
| Polyester 1 (in einer Vorreaktion umgesetzt mit Stearylisocyanat bei einem NCO:OH Verhälnis von 0,95:1 ; Umsetzung der Isocyanatgruppen mit den Hydrxylgruppen erfolgt bei 130°C.) | 40 TI. |
| Kohlenwasserstoffharz (M_{N} < 1000) | 10,0 |
| Monomerarmes Prepolymer | 50,0 |

Nach dem Mischen der Bestandteile kann der Klebstoff in feuchtigkeitsdicht schließende Behälter abgefüllt und gelagert werden.
NCO-Gehalt: 2,95 %

| | Viskosität 90°C | Viskosität nach Alterung (8h, 90°C) | Offene Zeit |
|---|---|---|---|
| Versuch 1 | 25500 mPas | 38200 m Pas | 500 sek |
| Versuch 2 | 2100 mPas | 2400 mPas | 120 sek |

Der erfindungsgemäße Klebstoff hat eine niedrigere Viskosität. Diese ist auch nach thermischer Belastung stabil.

Verklebungsversuche zeigen eine schnellere Kristallisation und kürzere offene Zeit des aufgetragenen Klebstofffilms.

### Prüfmethode zur Bestimmung des Kennwertes "Offene Zeit"

Auf einer Spanplatte wird mittels einer beheizten Kartuschenpistole (130°C) eine 3mm starke Hotmeltraupe appliziert.

Nacheinander werden in definierten Zeitintervallen Buchenholzspatel in die heiße Raupe gedrückt und jeweils kurz mit einem definierten Gewicht (500 g) angepresst.

Anschließend werden die Spatel von der Spanplatte abgerissen. Als "Offene Zeit" wird die Zeit notiert, wenn an dem Buchenholzspatel kein Spanausriss mehr sichtbar ist.

## Patentansprüche

1. Reaktiver Schmelzklebstoff enthaltend
- 30 bis weniger als 70 Gew-% mindestens eines Prepolymeren mit mindestens zwei Isocyanatgruppen mit einem Molekulargewicht unter 6000 g/mol hergestellt aus Polyetherpolyolen und/oder Polyesterpolyolen umgesetzt mit einem molaren Überschuss von Diisocyanaten, wobei das Prepolymer weniger als 1 % monomeres Diisocyanat enthält,
- mehr als 30 bis 70 Gew.-% eines thermoplastischen Polyesters mit einem zahlenmittleren Molekulargewicht (M_{N}) unter 6000 g/mol, der weniger als 1,4 mit NCO reaktive Gruppen aufweist, und
- gegebenenfalls bis 30 Gew-% Additive aus der Gruppe der Katalysatoren, Harze, Weichmacher, Füller, Pigmente, Stabilisatoren, weitere Polymere oder Haftvermittler.

2. Schmelzklebstoff nach Anspruch 1, **dadurch gekennzeichnet, dass** die Viskosität gemessen bei einer Temperatur zwischen bei 90°C bis 130°C von 4000 mPas bis 40000 mPas beträgt (EN ISO 2555).

3. Schmelzklebstoff nach einem der Ansprüche 1 oder 2, **dadurch gekennzeichnet, dass** der NCO-Gehalt des Schmelzklebstoffs von 0,25 bis 4 Gew.-% NCO beträgt.

4. Schmelzklebstoff nach einem der Ansprüche 1 bis 3, **dadurch gekennzeichnet, dass** als Diisocyanate aromatische Diisocyanate eingesetzt werden.

5. Schmelzklebstoff nach einem der Ansprüche 1 bis 4, **dadurch gekennzeichnet, dass** als Polyole des Prepolymeren Polyesterdiole, insbesondere Polyetherdiole eingesetzt werden.

6. Schmelzklebstoff nach einem der Ansprüche 1 bis 5, **dadurch gekennzeichnet, dass** der Monomergehalt der Prepolymere durch Destillation vermindert wird.

7. Schmelzklebstoff nach einem der Ansprüche 1 bis 6, **dadurch gekennzeichnet, dass** der thermoplastische Polyester hergestellt wird durch Umsetzung von Polyesterdiolen mit niedermolekularen monofunktionellen Verbindungen ausgewählt aus Carbonsäurehalogeniden, Carbonsäureanhydriden oder einwertigen Isocyanaten zu Polyestern mit weniger als 1,4 funktionellen Gruppen.

8. Schmelzklebstoff nach Anspruch 7, **dadurch gekennzeichnet, dass** die Funktionalität des thermoplastischen Polyesters unter 1 liegt, insbesondere, dass im Wesentlichen keine mit NCO reaktiven Gruppen enthalten sind.

9. Schmelzklebstoff nach einem der Ansprüche 1 bis 8, **dadurch gekennzeichnet, dass** der thermoplastische Polyester aus aliphatischen Dicarbonsäuren aufgebaut ist.

10. Schmelzklebstoff nach einem der Ansprüche 1 bis 9, **dadurch gekennzeichnet, dass** der Polyester im Schnitt eine Urethangruppen aufweist, insbesondere zwei.

11. Schmelzklebstoff nach einem der Ansprüche 1 bis 10, **dadurch gekennzeichnet, dass** ein Gemisch aus Polyetherprepolymeren und thermoplastischen Polyestern eingesetzt wird.

12. Schmelzklebstoff nach einem der Ansprüche 1 bis 11, **dadurch gekennzeichnet, dass** als Additiv bis zu 20 Gew.-% Harze enthalten sind.

## Claims

1. A reactive hot-melt adhesive containing
- from 30 to less than 70 wt.% at least one prepolymer comprising at least two isocyanate groups having a molecular weight of under 6,000 g/mol, prepared from polyether polyols and/or polyester polyols reacted with a molar excess of diisocyanates, wherein the prepolymer contains less than 1% monomeric diisocyanate,
- from more than 30 to 70 wt.% a thermoplastic polyester having a number average molecular weight (MN) of under 6,000 g/mol and comprising fewer than 1.4 groups reactive with NCO, and
- optionally up to 30 wt.% additives from the group of catalysts, resins, plasticizers, fillers, pigments, stabilizers, additional polymers or adhesion promoters.

2. The hot-melt adhesive according to claim 1, **characterized in that** the viscosity is from 4,000 mPa to 40,000 mPa when measured at a temperature of between 90 °C and 130 °C (EN ISO 2555).

3. The hot-melt adhesive according to either claim 1 or claim 2, **characterized in that** the NCO content of the hot-melt adhesive is from 0.25 to 4 wt.% NCO.

4. The hot-melt adhesive according to one of claims 1 to 3, **characterized in that** aromatic diisocyanates are used as diisocyanates.

5. The hot-melt adhesive according to one of claims 1 to 4, **characterized in that** polyester diols, in particular polyether diols, are used as polyols of the prepolymer.

6. The hot-melt adhesive according to one of claims 1 to 5, **characterized in that** the monomer content of the prepolymers is reduced by distillation.

7. The hot-melt adhesive according to one of claims 1 to 6, **characterized in that** the thermoplastic polyester is prepared by reacting polyester diols with monofunctional compounds having a low molecular weight selected from carboxylic acid halides, carboxylic acid anhydrides or monovalent isocyanates to yield polyesters having fewer than 1.4 functional groups.

8. The hot-melt adhesive according to claim 7, **characterized in that** the functionality of the thermoplastic polyester is less than 1, in particular **in that** substantially no groups reactive with NCO are contained.

9. The hot-melt adhesive according to one of claims 1 to 8, **characterized in that** the thermoplastic polyester is formed of aliphatic dicarboxylic acids.

10. The hot-melt adhesive according to one of claims 1 to 9, **characterized in that** the polyester comprises on average one urethane group, in particular two.

11. The hot-melt adhesive according to one of claims 1 to 10, **characterized in that** a mixture of polyether prepolymers and thermoplastic polyesters is used.

12. The hot-melt adhesive according to one of claims 1 to 11, **characterized in that** up to 20 wt.% resins are contained as an additive.

## Revendications

1. Colle thermofusible réactive contenant
- de 30 à moins de 70 % en poids d'au moins un prépolymère avec au moins deux groupes isocyanate présentant une masse moléculaire inférieure à 6 000 g/mol, obtenu à partir de polyols de polyéther et/ou de polyols de polyester mis en réaction avec un excédent molaire de diisocyanate, dans laquelle le prépolymère contient moins de 1 % de diisocyanate monomère,
- de plus de 30 à 70 % en poids d'un polyester thermoplastique présentant une masse moléculaire moyenne en nombre (MN) inférieure à 6 000 g/mol, présentant moins de 1,4 groupes réactifs avec les groupes NCO, et
- le cas échéant, jusqu'à 30 % en poids d'additifs du groupe des catalyseurs, des résines, des agents adoucissants, des charges, des pigments, des stabilisants, des autres polymères ou des agents d'adhérence.

2. Colle thermofusible selon la revendication 1, **caractérisée en ce que** la viscosité mesurée à une température comprise entre 90 °C et 130 °C va de 4 000 mPas à 40 000 mPas (EN ISO 2555).

3. Colle thermofusible selon l'une quelconque des revendications 1 ou 2, **caractérisée en ce que** la teneur en NCO de la colle thermofusible va de 0,25 à 4 % en poids de NCO.

4. Colle thermofusible selon l'une quelconque des revendications 1 à 3, **caractérisée en ce que** l'on utilise en tant que diisocyanate, un diisocyanate aromatique.

5. Colle thermofusible selon l'une quelconque des revendications 1 à 4, **caractérisée en ce que** l'on utilise en tant que polyols du prépolymère, des diols de polyester, en particulier des diols de polyéther.

6. Colle thermofusible selon l'une quelconque des revendications 1 à 5, **caractérisée en ce que** la teneur en monomère du prépolymère est réduite par distillation.

7. Colle thermofusible selon l'une quelconque des revendications 1 à 6, **caractérisée en ce que** le polyesther thermoplastique est obtenu par mise en réaction de diols de polyester avec des liaisons monofonctionnelles de faible masse moléculaire choisies parmi les halogénures d'acide carboxylique, les anhydrides d'acide carboxylique ou les isocyanates monovalents, produisant des polyesters présentant moins de 1,4 groupes fonctionnels.

8. Colle thermofusible selon la revendication 7, **caractérisée en ce que** la fonctionnalité des polyesters thermoplastiques est inférieure à 1, en particulier, **en ce qu'**essentiellement aucun groupe réactif avec des groupes NCO n'est présent.

9. Colle thermofusible selon l'une quelconque des revendications 1 à 8, **caractérisée en ce que** le polyester thermoplastique est constitué d'acides dicarboxyliques aliphatiques.

10. Colle thermofusible selon l'une quelconque des revendications 1 à 9, **caractérisée en ce que** le polyester présente, en coupe, un groupe uréthane, et en particulier deux.

11. Colle thermofusible selon l'une quelconque des revendications 1 à 10, **caractérisée en ce qu'**on utilise un mélange de prépolymères de polyéther et de polyesters thermoplastiques.

12. Colle thermofusible selon l'une quelconque des revendications 1 à 11, **caractérisée en ce que** jusqu'à 20 % en poids de résines sont contenues en tant qu'additifs.
